# DEMANDE DE BREVET EUROPEEN

(11) **EP 2 821 703 A1**
(43) Date de publication de la demande: **07.01.2015**
(21) Numéro de dépôt: 14175654.4
(22) Date de dépôt: 03.07.2014
(51) Int. Cl.: F23J 15/06, B01D 51/00

(54) **Procédé de chauffage de fumées par compression dans le but de réaliser une intégration thermique entre une unité de capture de CO2 et une unité de séparation des gaz de l air.**

(30) Priorité: 05.07.2013 FR 1356639
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Bonne, Frédéric, 75020 PARIS (FR); Cavagne, Patrice, 94170 LE PERREUX SUR MARNE (FR); Leclerc, Mathieu, 75020 PARIS (FR)
(74) Mandataire: Mercey, Fiona Susan

(57) **Abrégé**

Dans un procédé de prétraitement d'un flux d'alimentation (3) contenant plus de 60% mol de CO₂ à une température supérieure à 100°C et à une pression comprise entre 0,8 et 2 bara, les étapes suivantes sont utilisées :
• Compression du flux d'alimentation jusqu'à une pression comprise entre 1 et 2,5 bara,
• Réduction de la température des fumées par échange de chaleur avec de l'eau sous pression dans un échangeur de chaleur (7) jusqu'à une température comprise entre 10 et 90°C, et
• Utilisation de l'eau réchauffée (11) comme une source de chaleur.

## Description

La présente invention concerne le traitement à basse pression de fumées issu de procédé à oxycombustion. Ces procédés peuvent être par exemple la combustion du gaz naturel ou du charbon à l'oxygène purifié dans le but de produire de l'énergie (thermique ou électrique) ou encore les procédés de production de ciment à l'oxygène purifié. Ces procédés sont particulièrement adaptés à la capture du CO₂ car les fumées qui en sont issues sont ainsi très concentrées en CO₂ (pureté supérieure à 60% mol) ce qui permet une séparation et une purification du CO₂ peu onéreuse et efficace par voie cryogénique.

L'accroissement de la concentration en dioxyde de carbone dans l'atmosphère est en très grande partie la cause du réchauffement global. Le CO₂ d'origine humaine est essentiellement émis dans l'atmosphère par la combustion des combustibles fossiles dans les centrales thermiques et dans un certain nombre d'unités industrielles comme les cimenteries.

Les centrales thermiques permettent par combustion de combustibles de dégager de la chaleur utilisable pour produire de la vapeur d'eau et éventuellement de l'énergie mécanique ou électrique. Les fumées de combustion dégagent des quantités importantes de CO₂ dans l'atmosphère. Dans une cimenterie, une part importante du CO₂ provient aussi de la combustion de déchets inflammables et de combustibles fossiles mais aussi des réactions chimiques mises en jeu dans la production du ciment.

Les températures employées dans ces procédés étant particulièrement élevées, il est crucial d'éviter les pertes thermiques vers l'extérieur du procédé (air ambiant) pour éviter les pertes d'énergie. Ainsi, en réduisant les pertes d'énergie, on va réduire la consommation en combustible du procédé et faire par le fait des économies substantielles. Une part importante de l'énergie à récupérer est contenue dans les fumées issues de ces procédés sous forme thermique. On va donc investir dans une série d'échangeurs de chaleur qui vont permettre de préchauffer les combustibles ou/ou les réactifs utilisés en amont du procédé.

Jusqu'à maintenant, cette intégration thermique était optimisée en réalisant un compromis entre le coût de ces échangeurs (coût du capital) et le gain en énergie (coût opératoire). Les derniers échangeurs qui permettraient de récupérer l'énergie aux plus basses températures (<200°C) sont très rarement employés car leurs coûts comparés au gain énergétique potentiel est trop important pour justifier leur investissement. Ainsi, les fumées émises à l'atmosphère de ces procédés sont très souvent à des températures supérieures à 100°C. Si des limites sont appliquées en termes de température ou d'émission d'impuretés (SOx, NOx, particules etc.), des tours à contacts directs avec de l'eau de refroidissement peuvent être employées. Un volume très important d'eau est mis en contact avec les fumées, réduisant ainsi leur température et permettant aussi l'abattement d'une partie significative des impuretés. On pourra aussi ajouter un réactif chimique à l'eau de refroidissement ou dans une section dédiée de la tour pour augmenter l'abattement en impuretés. Mais la qualité des condensats provenant de ces tours (leur acidité en particulier) et leur température basse (le volume très important d'eau utilisée ne permet pas d'atteindre une température élevée) ne permettent pas une intégration thermique dans cette section du procédé. Ces condensats sont donc traités séparément.

Dans le cas de procédé à oxycombustion avec capture et purification du CO₂, ces fumées sont traitées dans des unités dédiées à la capture et à la purification du CO₂. Pour réaliser cette séparation, il convient de comprimer les fumées pour atteindre la pression adéquate à l'optimisation du procédé. Pour diminuer la demande en énergie requise pour réaliser cette compression, on va chercher à réduire au maximum la température au sein du compresseur et à réaliser une compression s'approchant le plus possible du modèle isotherme. Ainsi, la réduction de la température des fumées permet un gain supplémentaire qui dans ce cas peut justifier l'investissement de l'échangeur de chaleur et la récupération de l'énergie associée.

Les fumées issues de procédés à oxycombustion étant très souvent à basse pression (autour de la pression atmosphérique voire en léger vide), l'ajout d'un échangeur de chaleur va amener de nouvelles pertes de charges qui vont encore diminuer la pression des fumées. Cela qui peut augmenter les entrées d'air ambiant dans le procédé, ce qui va diluer le CO₂ et donc rendre plus difficile et donc plus onéreuse la séparation du CO₂ des fumées.

De plus, dans certains cas des filtres sont utilisés en amont du compresseur pour le protéger des poussières pouvant être contenues dans les fumées. Pour pallier les pertes de charge de ce filtre et assurer son démarrage sans avoir démarré le compresseur, on utilise un ventilateur en aval du filtre. On positionne le ventilateur en aval pour éviter un dimensionnement du filtre sous pression.

De plus, la température des fumées étant relativement basse pour le procédé en amont, une utilisation efficace de la chaleur disponible est à prévoir pour maximiser et optimiser la récupération énergétique du procédé global.

Partant de là, un problème qui se pose est de fournir une installation permettant de valoriser cette chaleur efficacement sans subir des pertes de charge trop importantes. La solution proposée est donc d'employer le ventilateur en premier lieu. En effet, l'efficacité de ce genre d'équipement étant assez faible, les fumées vont s'échauffer ce qui va permettre une meilleure intégration thermique. Ensuite, on va utiliser un échangeur dans lequel on va chauffer de l'eau contre les fumées puis le filtre. Les pertes de charge dans l'échangeur vont limiter la pression en entrée du filtre ce qui va peu impacter sont dimensionnement. L'eau réchauffée pourra être utilisée en remplacement d'autres sources de chaleur habituellement utilisée (électrique ou vapeur):
- Pour régénérer les sécheurs de l'unité de séparation d'air fournissant l'oxygène purifié au procédé et ceux de l'unité de capture et de purification du CO₂. En effet, sans le ventilateur et la surchauffe des fumées associée, la température qu'aurait atteinte l'eau chaude n'aurait pas permis une régénération de ces sécheurs. Si la température atteinte n'est pas encore suffisante, un appoint en énergie électrique peut être envisagé
- Pour chauffer des gaz procédés de l'unité de capture et de purification du CO₂, comme les gaz non condensables avant leur envoi dans une turbine ou dans une unité d'oxydation catalytique du CO₂
- Pour préchauffer l'oxygène purifié avant son envoi dans le procédé de combustion.

L'eau chaude utilisée et donc refroidie pourra être renvoyée à l'échangeur par le biais d'une ou plusieurs pompes, on forme ainsi une boucle fermée d'eau.

Pour pouvoir contrôler la température de retour de l'eau refroidie, un échangeur (de type tour aéroréfrigérante, ouverte ou fermée, ou même un échangeur pour un autre co-produit) dissipant la chaleur en excès peut être employé pour refroidir une part de l'eau chaude.

Selon un objet de l'invention, il est prévu un procédé de prétraitement d'un flux d'alimentation contenant plus de 60% mol de CO₂ à une température supérieure à 100°C et à une pression comprise entre 0,8 et 2 bara comprenant au moins les étapes suivantes :
- Compression du flux d'alimentation jusqu'à une pression comprise entre 1 et 2,5 bara ;
- Réduction de la température des fumées par échange de chaleur avec de l'eau sous pression dans un échangeur de chaleur jusqu'à une température comprise entre 10 et 90°C ? et
- Utilisation de l'eau réchauffée comme une source de chaleur.

Selon d'autres caractéristiques facultatives :
- l'eau réchauffée est utilisée pour la régénération du sécheur d'une unité de séparation des gaz de l'air,
- l'eau réchauffée est utilisée pour la régénération du sécheur d'une unité de capture et de purification du CO₂.
- l'eau réchauffée est utilisée pour préchauffer les gaz non condensés d'une unité de capture et de purification du CO₂ avant leur envoi dans un réacteur d'oxydation catalytique.
- l'eau réchauffée est utilisée pour préchauffer les gaz non condensés d'une unité de capture et de purification du CO₂ avant leur envoi dans une turbine.
- l'eau réchauffée est utilisée pour préchauffer l'oxygène produit par une unité de séparation des gaz de l'air.
- une part de l'eau réchauffée est refroidie par un moyen extérieur comme par exemple l'air ambiant ou de l'eau de refroidissement
- l'eau réchauffée est utilisée dans un groupe frigorifique à absorption utilisée dans une unité de séparation des gaz de l'air.
- l'eau réchauffée est utilisée dans un groupe frigorifique à absorption utilisée dans d'une unité de capture et de purification du CO₂.
- l'eau refroidie est pompée et renvoyée à l'échangeur de refroidissement des fumées.

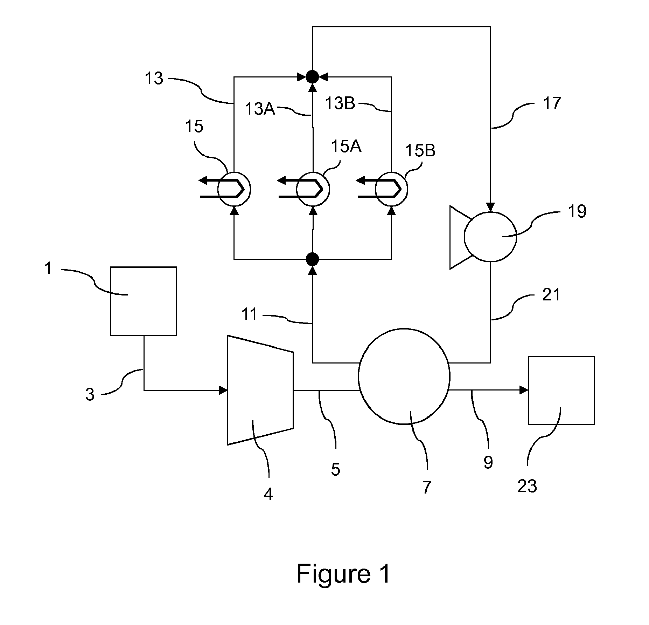

L'invention sera décrite de manière plus détaillée en se référant à la Figure.

Un flux d'alimentation 3 provient d'une unité d'oxycombustion 1, pouvant être une unité de combustion du gaz naturel ou du charbon à l'oxygène purifié dans le but de produire de l'énergie (thermique ou électrique) ou encore une unité de production de ciment à l'oxygène purifié Le flux 3 contient plus de 60% de CO₂ à une température supérieure à 100°C et à une pression comprise entre 0,8 et 2 bara est comprimé dans un compresseur 4 jusqu'à une pression comprise entre 1 et 2,5 bara. Ensuite le flux comprimé 5 est refroidi dans un échangeur de chaleur 7 par échange de chaleur avec de l'eau sous pression jusqu'à une température comprise entre 10 et 90°C. L'eau ainsi réchauffée 11 est utilisée là où une source de chaleur à une température équivalente est requise.

Dans la figure, l'eau réchauffée 11 est divisée en trois portions 13, 13A, 13B. Au moins une de ces portions 13, 13A, 13B peut être est utilisée pour :
- chauffer un gaz de régénération dans un échangeur 15, 15A, 15B pour que le gaz serve à la régénération du sécheur d'une unité de séparation des gaz de l'air
- chauffer un gaz de régénération dans un échangeur 15, 15A, 15B pour que le gaz serve à la régénération du sécheur 15, 15A, 15B d'une unité de capture et de purification du CO₂.
- préchauffer dans un échangeur 15, 15A, 15B les gaz non condensés d'une unité de capture et de purification du CO₂ avant leur envoi dans un réacteur d'oxydation catalytique.
- préchauffer dans un échangeur 15, 15A, 15B les gaz non condensés d'une unité de capture et de purification du CO₂ avant leur envoi dans une turbine.
- préchauffer dans un échangeur 15, 15A, 15B l'oxygène produit par une unité de séparation des gaz de l'air.

Une part de l'eau réchauffée 11 peut être refroidie dans un échangeur 15, 15A, 15B par un moyen extérieur comme par exemple l'air ambiant ou de l'eau de refroidissement

L'eau réchauffée 11 peut être utilisée dans un groupe frigorifique à absorption utilisée dans une unité de séparation des gaz de l'air.

L'eau réchauffée 11 peut être utilisée dans un groupe frigorifique à absorption utilisée dans d'une unité de capture et de purification du CO₂.

L'eau refroidie 17 est pompée dans une pompe 19 comme liquide 21 et renvoyée à l'échangeur 7 de refroidissement des fumées.

Les fumées refroidies 9 sont envoyées à une unité de capture et de purification de CO₂ 21.

## Revendications

1. Procédé de prétraitement d'un flux d'alimentation (3) contenant plus de 60% mol de CO₂ à une température supérieure à 100°C et à une pression comprise entre 0,8 et 2 bara comprenant au moins les étapes suivantes :
• Compression du flux d'alimentation jusqu'à une pression comprise entre 1 et 2,5 bara,
• Réduction de la température des fumées par échange de chaleur avec de l'eau sous pression (21) dans un échangeur de chaleur (7) jusqu'à une température comprise entre 10 et 90°C et
• Utilisation de l'eau réchauffée (11), provenant de l'échangeur de chaleur, comme une source de chaleur.

2. Procédé selon la revendication 1 où l'eau réchauffée (11) est utilisée pour la régénération du sécheur d'une unité de séparation des gaz de l'air.

3. Procédé selon l'une des revendications précédentes où l'eau réchauffée (11) est utilisée pour la régénération du sécheur d'une unité de capture et de purification du CO₂ (21).

4. Procédé selon l'une des revendications précédentes où l'eau réchauffée (11) est utilisée pour préchauffer les gaz non condensés d'une unité de capture et de purification du CO₂ (21) avant leur envoi dans un réacteur d'oxydation catalytique.

5. Procédé selon l'une des revendications précédentes où l'eau réchauffée (11) est utilisée pour préchauffer les gaz non condensés d'une unité de capture et de purification du CO₂ (21) avant leur envoi dans une turbine.

6. Procédé selon l'une des revendications précédentes où l'eau réchauffée (11) est utilisée pour préchauffer l'oxygène produit par une unité de séparation des gaz de l'air.

7. Procédé selon l'une des revendications précédentes où une part de l'eau réchauffée (11) est refroidie par un moyen extérieur comme par exemple l'air ambiant ou de l'eau de refroidissement.

8. Procédé selon l'une des revendications précédentes où l'eau réchauffée (11) est utilisée dans un groupe frigorifique à absorption utilisée dans une unité de séparation des gaz de l'air.

9. Procédé selon l'une des revendications précédentes où l'eau réchauffée (11) est utilisée dans un groupe frigorifique à absorption utilisée dans d'une unité de capture et de purification du CO₂ (21).

10. Procédé selon l'une des revendications précédentes où l'eau refroidie (17) est pompée et renvoyée à l'échangeur de chaleur (7) de refroidissement des fumées.
